(19) Europäisches Patentamt
European Patent Office
Office européen des brevets

(11) **EP 3 861 630 B1**

(12) **FASCICULE DE BREVET EUROPEEN**

(45) Date de publication et mention
de la délivrance du brevet:
**31.12.2025 Bulletin 2026/01**

(21) Numéro de dépôt: **19766271.1**

(22) Date de dépôt: **17.09.2019**

(51) Classification Internationale des Brevets (IPC):
***H02P 6/10*** *(2006.01)*     ***H02P 6/34*** *(2016.01)*
***H02P 29/60*** *(2016.01)*

(52) Classification Coopérative des Brevets (CPC):
**H02P 6/10; H02P 6/34; H02P 29/60**

(86) Numéro de dépôt international:
**PCT/EP2019/074809**

(87) Numéro de publication internationale:
**WO 2020/069849 (09.04.2020 Gazette 2020/15)**

(54) **DISPOSITIF DE COMMANDE D'UN ONDULEUR**

UMRICHTERSTEUERUNG VORRICHTUNG

INVERTER CONTROL DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.10.2018 FR 1859187**

(43) Date de publication de la demande:
**11.08.2021 Bulletin 2021/32**

(73) Titulaire: **IFP Energies nouvelles
92852 Rueil-Malmaison (FR)**

(72) Inventeurs:
• **BATTISTON, Alexandre
92852 RUEIL-MALMAISON CEDEX (FR)**
• **KUENTZMANN, Emmanuel
92852 RUEIL-MALMAISON CEDEX (FR)**

• **VIDAL-NAQUET, Fabien
92852 RUEIL-MALMAISON CEDEX (FR)**
• **DIB, Wissam
92852 RUEIL-MALMAISON CEDEX (FR)**
• **HAJE OBEID, Najla
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
EP-A1- 2 161 828     EP-A1- 2 237 401
EP-A1- 2 533 417     EP-A2- 1 850 465
GB-A- 2 497 595     JP-A- 2014 220 947
JP-A- H11 220 900     US-A1- 2012 212 167
US-A1- 2017 133 961

**Description**

L'invention présente concerne un dispositif de commande d'un onduleur disposé entre une alimentation électrique et une machine électrique pour convertir du courant électrique, généralement continu, fourni par l'alimentation en un courant alternatif utilisable par la machine.

Les onduleurs comprennent des interrupteurs respectivement associés aux fils de phase de la machine électrique et dont les commutations entre l'ouverture et la fermeture sont synchronisées de manière à transformer le courant continu en un courant approximativement sinusoïdal avec le déphasage voulu à chaque phase. Dans ces procédés, dits de modulation de largeur d'impulsion (MLI, ou PWM en anglais), un paramètre important à considérer est la fréquence des impulsions de découpage du courant. Idéalement, pour obtenir un couple régulier à la machine électrique et pour maximiser le rendement, le courant de chaque phase doit être aussi sinusoïdal régulier que possible, ce qu'on obtient en augmentant la fréquence de découpage de l'onduleur. Cependant, l'augmentation de la fréquence de découpage se fait aussi au détriment de l'efficacité de l'onduleur, et de manière très significative. On recherche donc en général une fréquence de découpage optimale (définie souvent comme le rendement global du système comprenant l'onduleur et la machine électrique) pour concilier au mieux ces exigences contradictoires. Mais cette fréquence optimale varie en fonction des paramètres de fonctionnement de la machine électrique, et notamment de sa vitesse de rotation $\omega$ et de sa charge, qu'on peut corréler à l'intensité I du courant d'alimentation. Des procédés permettant d'ajuster la fréquence de découpage de l'onduleur, en fonction de l'un ou l'autre des paramètres de fonctionnement, ont déjà été proposés. On citera le document US 8456115 B2, qui propose le pilotage d'un moteur électrique avec une fréquence de découpage variable choisie en fonction du point de fonctionnement du moteur sur deux plages de vitesse, et le document US 9024557 B2, qui propose de piloter un onduleur avec une fréquence de découpage variable sur toute la plage de vitesse ou de charge du moteur. On citera également EP 1 850 465 A2, EP 2 533 417 A1, EP 2 161 828 A1, US 2017/133961 A1, EP 2 237 401 A1 qui proposent de piloter l'onduleur avec une fréquence de découpage variable telle que divulguée dans le préambule de la revendication 1.

L'invention est divulguée dans la revendication indépendante 1 jointe. Elle est fondée sur la constatation que de tels procédés sont toutefois insuffisants pour garantir le bon fonctionnement du système en toutes circonstances. Un dispositif de commande amélioré de l'onduleur est proposé en conséquence.

Sous un aspect général, l'invention est relative à un dispositif de commande d'un onduleur appartenant à un système comprenant notamment une machine électrique et une alimentation électrique fournissant un courant électrique à la machine électrique en passant par l'onduleur, le dispositif de commande étant conçu pour faire appliquer une fréquence de découpage du courant électrique par l'onduleur qui varie en fonction de paramètres de fonctionnement de la machine électrique pour obtenir un fonctionnement optimal, caractérisé en ce qu'il comprend une carte, indiquant pour chaque valeur des paramètres au moins une fréquence extrême admissible en fonction d'au moins un autre paramètre, qui est un paramètre de bon fonctionnement d'un élément du système.

L'invention est donc fondée sur la reconnaissance d'autres paramètres que les paramètres de fonctionnement de la machine pour choisir la fréquence de découpage, en renonçant éventuellement à la fréquence qui assurerait le rendement optimal du système, s'il est constaté que cela ferait passer à un état de mauvais fonctionnement susceptible de l'endommager ou de le dégrader d'une façon quelconque.

La carte peut être établie au préalable et servir à chaque redémarrage du système, ou au contraire en ligne, c'est-à-dire pendant le service du système, à chaque démarrage de celui-ci.

Les paramètres de fonctionnement de la machine électrique utilisés en relation avec le procédé perfectionné par l'invention peuvent être les paramètres classiques de vitesse de rotation de la machine et d'intensité du courant électrique d'alimentation.

La carte peut avoir été établie par tout procédé convenable, notamment des analyses numériques ou des simulations, notamment sur ordinateur.

La fréquence extrême admissible peut dépendre d'une pluralité de paramètres conformes à ce qui précède, dont chacun devient prépondérant pour une partie respective des valeurs possibles des paramètres de fonctionnement. La fonction de fréquence extrême peut alors être considérée comme une synthèse, ou une concaténation, des fonctions de chacun des autres paramètres considérés.

Dans bien des cas, la fréquence extrême sera une fréquence minimale. Ce sera le cas notamment souvent avec des systèmes comprenant, ce qui est habituel, un filtre d'entrée à condensateur entre l'alimentation électrique et l'onduleur. Le paramètre de bon fonctionnement pourra alors être une intensité efficace de courant parvenant au condensateur ou une vitesse de variation de tension à ses bornes. Dans d'autres modes de réalisation possibles de l'invention, le paramètre pourra être un bruit émis par la machine électrique, une déformation (irrégularité) de couple à la machine électrique, un taux de distorsion harmonique du courant circulant dans la machine électrique, ou une amplitude absolue de cette distorsion.

L'invention sera maintenant décrite en détail au moyen des figures suivantes, qui illustrent son contexte et en représentent une réalisation, donnée à titre purement illustratif :

- la figure 1 représente le système comprenant l'onduleur ;

- les figures 2a et 2b représentent des procédés de découpage de courant continu à des fréquences différentes ;

- la figure 3 illustre des courbes de pertes dans l'onduleur ;

- la figure 4 représente le dispositif de commande de l'onduleur ;

- et la figure 5 illustre des courbes d'obtention d'un point de fréquence limite.

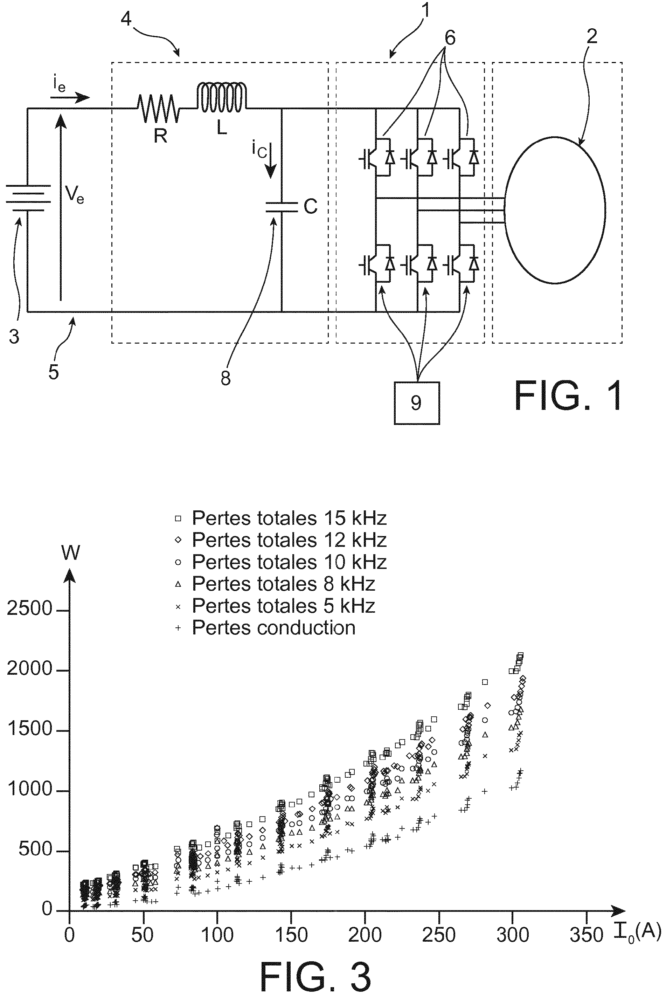

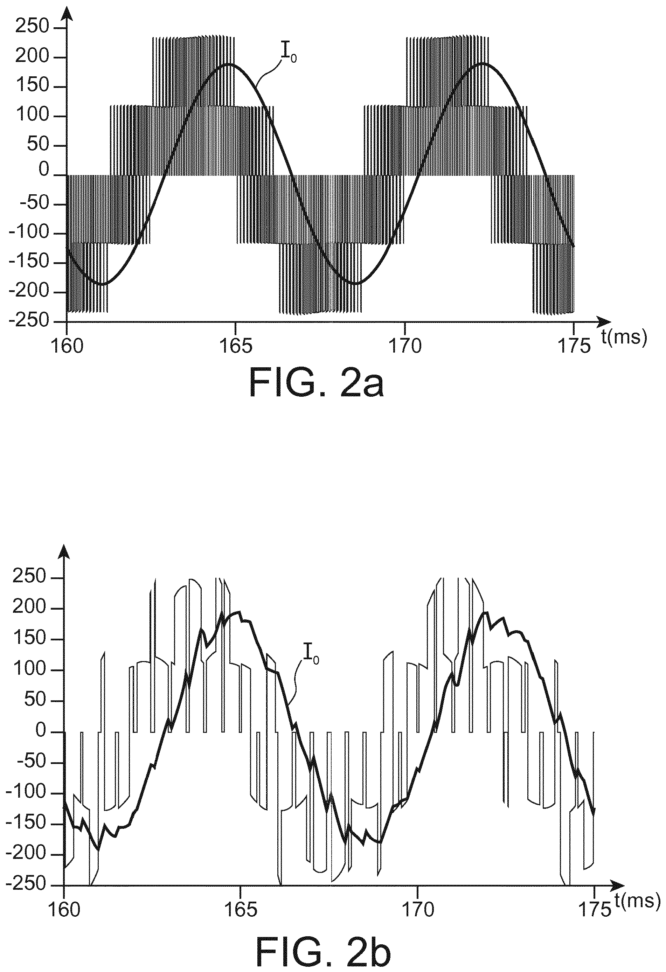

On présente la figure 1. On y trouve le schéma classique d'un système à onduleur 1 triphasé associé à une machine électrique 2. Une source de tension $V_e$ (une batterie par exemple) est une alimentation 3 électrique qui fournit un courant d'alimentation $i_e$ continu. Un étage de filtrage 4 permet de limiter les perturbations générées par l'onduleur 1 et de stabiliser le bus 5 transportant le courant d'alimentation $i_e$. Des interrupteurs 6 de l'onduleur 1, commandés de manière complémentaire, permettent d'appliquer des créneaux de tension variables à la machine électrique 2, comme l'illustrent les figures 2a et 2b. Sur la figure 2a, la fréquence de découpage f du courant d'alimentation $i_e$ par l'onduleur 1 est significativement plus élevée que sur la figure 2b. On constate alors que le contenu harmonique (déformations) du courant sinusoïdal de la phase $I_a$ fourni à la machine électrique 2 est bien inférieur. Cependant, l'augmentation de la fréquence de découpage f se fait au détriment de l'efficacité de l'onduleur 1 : des pertes sont en effet subies à chaque commutation des interrupteurs 6. La figure 3 illustre les pertes de l'onduleur 1 selon l'amplitude $I_0$ du courant de phase dans la machine électrique et la fréquence de découpage f. Les pertes par conduction représentent la part irréductible des pertes de l'onduleur 1. Le rendement de l'onduleur 1 diminue donc avec l'augmentation de la fréquence de découpage f, et de manière très significative. On a donc besoin d'arbitrer entre l'augmentation de la fréquence de découpage f pour limiter l'occurrence de phénomènes délétères comme le vieillissement de l'alimentation 3, la sollicitation excessive de l'étage de filtrage 4 et la stabilité du fonctionnement du système, et sa diminution pour augmenter le rendement de l'onduleur 1. Une réponse partielle et connue consiste en l'adaptation continue de la fréquence de découpage f en cours de fonctionnement : on rend une fréquence de découpage f variable, par exemple selon le régime de la machine électrique 2, ou encore selon l'amplitude $I_0$ du courant de phase, comme on l'a indiqué.

Dans l'idéal, la détermination de la fréquence de découpage f peut par exemple se faire via la minimisation d'un coût arbitraire. Typiquement, il s'agit du rendement global du système (d'autres paramètres de coûts peuvent être choisis sans sortir du cadre de l'invention).

On cherche alors, pour un régime $\omega$ et un courant $I$ donné :

$$f\ (\omega, I)\ tel\ que\ \eta(\omega, I) = \max(\eta(f\ , \omega, I))$$

où $\eta$ est le rendement du système comprenant l'onduleur 1 et la machine électrique 2.

Le compromis considéré est alors que l'augmentation de la fréquence de découpage f améliore le rendement de la machine électrique 2 tandis que sa diminution améliore le rendement de l'onduleur 1.

Les procédés traditionnels ne garantissent pourtant pas un fonctionnement satisfaisant du système de la figure 1, tel qu'on l'a décrit jusqu'ici. Un bon rendement de la machine électrique 2 peut s'accompagner de déformations (irrégularités) inadmissibles du couple ou d'un bruit élevé de la machine électrique 2, qui peut présager de l'apparition d'avaries. Les variations brusques de courant s'exerçant à travers l'étage de filtrage 4 peuvent aussi l'endommager, et surtout un condensateur 8 utilisé pour absorber les oscillations des appels de courant à haute fréquence et soulager l'alimentation 3, car le condensateur 8 peut s'endommager lui-même s'il n'est pas dimensionné avec une capacité suffisante. D'autres critères de mauvais fonctionnement du système, menant ou non à des dommages possibles, peuvent être envisagés.

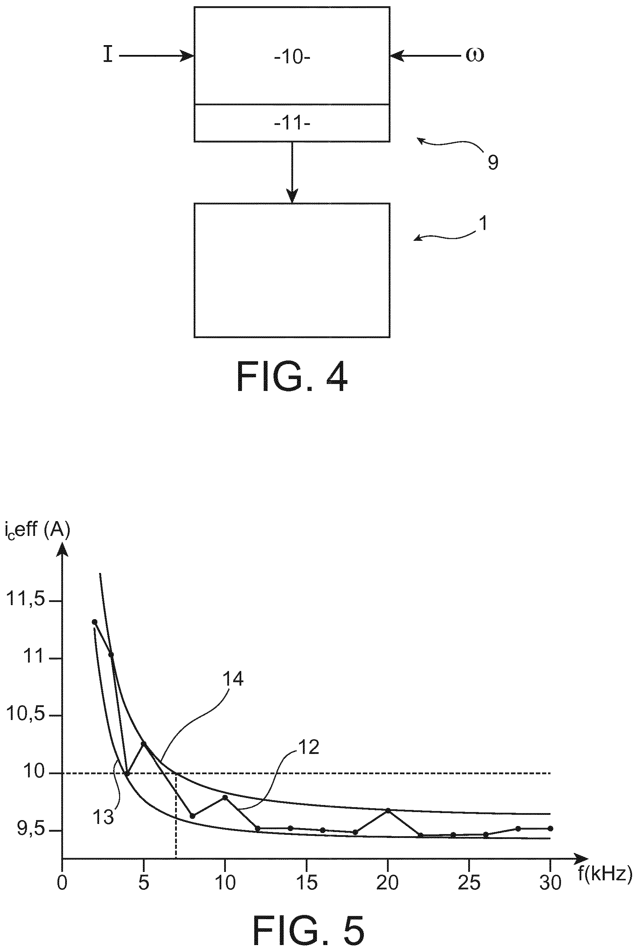

L'onduleur est pourvu d'un dispositif de commande 9 des interrupteurs 6, dont on va maintenant détailler la constitution au moyen de la figure 4.

Il comprend un étage principal 10, assurant l'application du procédé de recherche de rendement optimal, ou un autre procédé de sélection de la fréquence de découpage f conformément à ce qui précède, en fonction par exemple de l'intensité I du courant d'alimentation Ie et de la vitesse de rotation $\omega$ de la machine électrique 2, qui lui sont fournis par des capteurs quelconques. Il comprend aussi, de façon caractéristique de l'invention, un étage aval 11, qu'on pourrait appeler de filtrage numérique, et qui vérifie que la fréquence de découpage f proposée par l'étage principal 10, est conforme ou non à un ou plusieurs critères de bon fonctionnement du système.

L'étage aval 11 indique au moins une valeur limite de la fréquence de découpage f, selon un cahier des charges défini au départ, pour toute valeur des paramètres de fonctionnement (I, $\omega$, etc.) exploités par l'étage principal 10. L'idée est de traduire les contraintes de bon fonctionnement du système en les exprimant comme des limites admissibles (le plus souvent minimales) de la fréquence de découpage f.

Par exemple, le choix d'un niveau de bruit maximal de la machine électrique, en dB, peut se traduire par une contrainte sur la fréquence de découpage f minimale. On a vu en effet précédemment que le contenu harmonique des courants dans la machine électrique 2 avait un impact sur le couple et donc sur le bruit. De la même façon, un critère de déformation maximale de couple peut également se traduire par une limite minimale de fréquence de découpage.

De même, l'étage de filtrage 4 en entrée de l'onduleur 1 est directement affecté par la fréquence de découpage f, car le condensateur 8 d'entrée lisse les appels de courant. Deux limites s'imposent à ce condensateur 8 :

- l'énergie dissipée (fonction de $i_c^{eff})^2$, qui est l'amplitude de courant efficace à ses bornes) qui, si elle est trop élevée, va conduire à sa destruction ;
- le dV/dt (vitesse de variation de tension) subi par le condensateur 8, qui peut entraîner sa destruction également.

Ces deux limites de fonctionnement peuvent se traduire également par des fréquences de découpage minimales, qui vont également dépendre du point d'opération du moteur électrique.

Pour résumer, les contraintes sur la fréquence de découpage minimale pourront être, éventuellement par ordre décroissant d'importance :

- le dV/dt subi par le condensateur 8 ;
- l'énergie dissipée par le condensateur 8 ;
- le niveau de bruit maximal de la machine électrique 2 ;
- le critère de déformation de couple maximale de la machine électrique 2 ;
- le taux de distorsion harmonique du courant circulant dans la machine électrique ;
- l'amplitude absolue de distorsion harmonique du courant circulant dans la machine électrique 2.

La préparation de l'étage aval 11 du dispositif de commande 9 pourra s'effectuer de la façon suivante :

1. on détermine au moins une contrainte de bon fonctionnement dépendant de la fréquence de découpage f, par exemple en fonction d'un cahier des charges de la machine électrique 2 et/ou de l'onduleur 1 et/ou de l'étage de filtrage 4 ;

2. on traduit cette contrainte en une fréquence de découpage f extrême pour un ensemble de points de fonctionnement de la machine électrique (définis par le courant I dans les phases, et par la vitesse de rotation $\omega$ de la machine électrique) ; cet ensemble de points forme une carte de la fréquence de découpage f extrême en fonction de I et $\omega$. Cette étape peut être mise en œuvre par voie analytique ou par simulations numériques pour différentes fréquences de découpage f ;

3. on enregistre cette carte dans le système de commande 9 de l'onduleur 1.

L'onduleur 1 sera alors commandé de la façon habituelle, mais avec une limitation variable de la fréquence de découpage f, régie par la carte numérique exprimant une valeur de la fréquence extrême pour chaque valeur des paramètres I ou $\omega$, prise en compte dans le procédé principal. La fréquence de découpage f avant limitation éventuelle pourra être obtenue à l'étage principal 10 par tout procédé connu de l'homme du métier. Le calcul explicite de la fréquence de découpage f à appliquer pourra alors devenir la résolution de :

$$ f\ (\omega, I)\ tel\ que \quad \begin{cases} \eta(\omega, I) = \max\big(\ \eta(f\ , \omega, I)\big) \\ f\ (\omega, I) \geq f\ min(\omega, I) \end{cases} $$

si toutes les limites sont de fréquences minimales ; une troisième ligne est ajoutée comme suivant : $f(\omega, I) \leq f\,max(\omega, I)$ si une fréquence maximale $f\,max$ existe.

Ce calcul explicite de la fréquence de découpage f à appliquer est donc réalisé pendant le fonctionnement du système, alors que les autres étapes, relatives à l'établissement de la carte, ont été menées au préalable dans une phase de calibration du système. Cette calibration peut être définitive, c'est-à-dire qu'elle n'est pas nécessairement répétée à chaque redémarrage du système, puisqu'elle a été conclue par l'inscription de la carte sur une mémoire. Elle est toutefois particulière au système, et doit éventuellement être refaite si on change la machine électrique 2 ou l'étage de filtrage 4, par exemple. La carte peut être construite par des méthodes analytiques ou des simulations, entre autres. Dans d'autres modes de réalisation, la calibration pourrait au contraire être faite en service, après chaque démarrage du système, par des méthodes analytiques par exemple.

Un exemple est donné au moyen de la figure 5. Cet exemple concerne le critère de l'énergie dissipée par le condensateur 8. En fonction de la capacité du condensateur 8, on définit un seuil de courant $i_c^{eff}$ circulant dans le condensateur 8. L'axe des ordonnées est la valeur efficace du courant $i_c^{eff}$ et l'axe des abscisses, la fréquence de découpage f. Dans l'exemple, le seuil d'intensité admissible est fixé à 10A.

On simule la machine électrique 2 et l'onduleur 1. Pour chaque simulation, on fait varier la fréquence de découpage f, et on simule le courant $i_c^{eff}$ traversant le condensateur.

Les points des valeurs simulées peuvent être encadrés par des enveloppes 12 et 13. La fréquence de découpage extrême qu'on adopte est à l'intersection du seuil d'intensité admissible et de la courbe de simulation (on choisira ici plutôt l'enveloppe supérieure 13). La fréquence de découpage minimale fmin sera donc, en fonction de la valeur de seuil choisie de 10 A, d'environ 7 kHz pour la valeur correspondante des paramètres I et $\omega$. Il suffit de reproduire la démarche pour d'autres couples ($I,\omega$) pour obtenir cette limite fmin($\omega$, I) d'après ce critère relatif à l'énergie dissipée dans le condensateur 8 pour tous les points d'opération.

La fréquence extrême de découpage pourra être, selon le cas, une fréquence minimale ou une fréquence maximale. Des procédés comprenant à la fois une fréquence minimale et une fréquence maximale sont possibles. S'il existe plusieurs critères de détermination de la fréquence minimale (ou maximale), on retiendra, pour chaque valeur des paramètres de fonctionnement I et $\omega$, la limite permettant de satisfaire à tous les critères, c'est-à-dire la fréquence limite la plus élevée dans le cas de fréquence minimale. La carte est alors une concaténation des valeurs limites pour chaque critère retenu.

**Revendications**

1. Dispositif de commande (9) d'un onduleur (1) appartenant à un système comprenant notamment une machine électrique (2) et une alimentation électrique (3) fournissant un courant électrique à la machine électrique (2) en passant par l'onduleur (1), le dispositif de commande (9) étant conçu pour faire appliquer une fréquence de découpage (f) du courant électrique par l'onduleur (1) qui varie en fonction de paramètres (I, $\omega$) de fonctionnement de la machine électrique (2) pour obtenir un fonctionnement optimal via la minimisation d'un coût du rendement global du système de telle sorte que la fréquence de découpage (f) vérifie l'équation suivante : $\eta(\omega, I) = max(\eta(f, \omega, I))$ avec *n* le rendement global du système et I, $\omega$ des paramètres de fonctionnement de la machine électrique, **caractérisé en ce qu'**il comprend une carte (11), indiquant pour chaque valeur des paramètres (I, $\omega$) au moins une fréquence extrême admissible en fonction d'au moins un autre paramètre, qui est un paramètre de bon fonctionnement d'un élément du système, et **en ce que** lesdits autres paramètres fournis par la carte sont des paramètres autres que les paramètres de fonctionnement de la machine électrique et qui sont choisis parmi

   une vitesse de variation de tension $\left(\dfrac{dV}{dt}\right)$ aux bornes d'un condensateur (8) d'un filtre d'entrée (4) à condensateur (8) entre l'alimentation électrique (3) et l'onduleur (1) l'énergie dissipée par un filtre d'entrée (4) à condensateur (8) entre l'alimentation électrique (3) et l'onduleur (1),
   une intensité efficace de courant ($i_c^{eff}$) circulant dans le condensateur (8) d'un filtre d'entrée (4) à condensateur (8) entre l'alimentation électrique (3) et l'onduleur (1),
   un niveau de bruit maximal de la machine électrique,
   une déformation de couple maximale de la machine électrique,
   un taux de distorsion harmonique du courant circulant dans la machine électrique (2) une distorsion harmonique totale du courant circulant dans la machine électrique,
   une amplitude absolue de distorsion harmonique du courant électrique circulant dans la machine électrique.

2. Dispositif de commande d'un onduleur selon la revendication 1, **caractérisé en ce que** ladite carte est obtenue au préalable.

3. Dispositif de commande d'un onduleur selon la revendication 1, **caractérisé en ce que** ladite carte est obtenue en service après un démarrage du système.

4. Dispositif de commande d'un onduleur selon la revendication 1, 2 ou 3, **caractérisé en ce que** les paramètres de fonctionnement de la machine électrique sont une vitesse de rotation ($\omega$) de la machine électrique (2) et une intensité (I) du courant électrique.

5. Dispositif de commande d'un onduleur selon l'une quelconque des revendications 1 à 4, **caractérisé en ce que** la carte a été établie par des analyses numériques et/ou des simulations.

6. Dispositif de commande d'un onduleur selon l'une quelconque des revendications 1 à 5, **caractérisé en ce que** la fréquence extrême admissible est fonction d'une pluralité de dits autres paramètres, qui sont chacun prépondérants pour une partie respective de valeurs possibles des paramètres de fonctionnement.

7. Dispositif de commande d'un onduleur selon l'une quelconque des revendications 1 à 6, **caractérisé en ce que** la fréquence extrême admissible est une fréquence minimale (fmin).

8. Dispositif de commande d'un onduleur selon l'une quelconque des revendications 1 à 7, **caractérisé en ce que** le système comprend un filtre d'entrée (4) à condensateur (8) entre l'alimentation électrique (3) et l'onduleur (1).

**Patentansprüche**

1. Vorrichtung (9) zur Steuerung eines Wechselrichters (1), der zu einem System gehört, das insbesondere eine elektrische Maschine (2) und eine Stromversorgung (3), die über den Wechselrichter (1) einen elektrischen Strom an die elektrische Maschine (2) abgibt, umfasst, wobei die Vorrichtung (9) zur Steuerung dazu ausgelegt ist, eine Schaltfrequenz (f) zum Schalten des elektrischen Stroms durch den Wechselrichter (1) anwenden zu lassen, die sich in Abhängigkeit von Betriebsparametern (I, ω) der elektrischen Maschine (2) ändert, um einen optimalen Betrieb über die Minimierung von Kosten des Gesamtwirkungsgrads des Systems zu erhalten, so dass die Schaltfrequenz (f) die folgende Gleichung erfüllt: η(ω, I) = max(η(f, ω, I)), wobei η der Gesamtwirkungsgrad des Systems ist und I, ω Betriebsparameter der elektrischen Maschine sind, **dadurch gekennzeichnet, dass** sie eine Karte (11) umfasst, die für jeden Wert der Parameter (I, ω) mindestens eine zulässige extreme Frequenz in Abhängigkeit von mindestens einem anderen Parameter angibt, der ein Parameter für den einwandfreien Betrieb eines Elements des Systems ist, und dadurch, dass die von der Karte ausgegebenen anderen Parameter andere Parameter als die Betriebsparameter der elektrischen Maschine sind und ausgewählt sind aus

einer Spannungsänderungsgeschwindigkeit $(\frac{dV}{dt})$ an den Klemmen eines Kondensators (8) eines Eingangsfilters (4) mit Kondensator (8) zwischen der Stromversorgung (3) und dem Wechselrichter (1),
der von einem Eingangsfilter (4) mit Kondensator (8) zwischen der Stromversorgung (3) und dem Wechselrichter (1) abgeführten Energie,
einer Effektivstromstärke ($i_c^{eff}$), die in dem Kondensator (8) eines Eingangsfilters (4) mit Kondensator (8) zwischen der Stromversorgung (3) und dem Wechselrichter (1) fließt,
einem maximalen Geräuschpegel der elektrischen Maschine, einer maximalen Drehmomentdeformation der elektrischen Maschine,
einem Oberschwingungsgehalt des in der elektrischen Maschine (2) fließenden Stroms
einer Oberschwingungsgesamtverzerrung des in der elektrischen Maschine fließenden Stroms,
einer absoluten Amplitude der Oberschwingungsverzerrung des in der elektrischen Maschine fließenden elektrischen Stroms.

2. Vorrichtung zur Steuerung eines Wechselrichters nach Anspruch 1, **dadurch gekennzeichnet, dass** die Karte im Vorfeld erhalten wird.

3. Vorrichtung zur Steuerung eines Wechselrichters nach Anspruch 1, **dadurch gekennzeichnet, dass** die Karte im Betrieb nach einem Start des Systems erhalten wird.

4. Vorrichtung zur Steuerung eines Wechselrichters nach Anspruch 1, 2 oder 3, **dadurch gekennzeichnet, dass** die Betriebsparameter der elektrischen Maschine eine Drehzahl (ω) der elektrischen Maschine (2) und eine Stärke (I) des elektrischen Stroms sind.

5. Vorrichtung zur Steuerung eines Wechselrichters nach einem der Ansprüche 1 bis 4, **dadurch gekennzeichnet, dass** die Karte durch numerische Analysen und/oder Simulationen erstellt worden ist.

6. Vorrichtung zur Steuerung eines Wechselrichters nach einem der Ansprüche 1 bis 5, **dadurch gekennzeichnet, dass** die zulässige extreme Frequenz von einer Mehrzahl von anderen Parametern abhängig ist, die jeweils für einen jeweiligen Teil von möglichen Werten der Betriebsparameter ausschlaggebend sind.

7. Vorrichtung zur Steuerung eines Wechselrichters nach einem der Ansprüche 1 bis 6, **dadurch gekennzeichnet, dass** die zulässige extreme Frequenz eine minimale Frequenz (fmin) ist.

8. Vorrichtung zur Steuerung eines Wechselrichters nach einem der Ansprüche 1 bis 7, **dadurch gekennzeichnet, dass** das System einen Eingangsfilter (4) mit Kondensator (8) zwischen der Stromversorgung (3) und dem Wechselrichter (1) umfasst.

**Claims**

1. Device (9) for controlling an inverter (1) belonging to a system comprising in particular an electric machine (2) and a power supply (3) supplying an electric current to the electric machine (2) via the inverter (1), the control device (9) being designed to apply a switching frequency (f) to the electric current through the inverter (1) which varies as a function of operating parameters (I, $\omega$) of the electric machine (2), in order to achieve optimum operation by minimizing a cost of the overall efficiency of the system such that the switching frequency (f) satisfies the following equation: $\eta(\omega, I)$ = max($\eta$(f, $\omega$, I)), where $\eta$ is the overall efficiency of the system and I, $\omega$ are operating parameters of the electric machine, **characterized in that** it comprises a chart (11) indicating for each value of the parameters (I, $\omega$) at least one permissible extreme frequency as a function of at least one other parameter which is a parameter of proper operation of an element of the system, and **in that** said other parameters supplied by the chart are parameters other than the operating parameters of the electric machine and which are chosen from among a voltage change rate $(\frac{dV}{dt})$ across the terminals of a capacitor (8) of a capacitor-type (8) input filter (4) between the power supply (3) and the inverter (1), the energy dissipated by a capacitor-type (8) input filter (4) between the power supply (3) and the inverter (1), an RMS current intensity ($i_c^{eff}$) flowing through the capacitor (8) of a capacitor-type (8) input filter (4) between the power supply (3) and the inverter (1),

   a maximum noise level of the electric machine,
   a maximum torque deformation of the electric machine,
   a harmonic distortion rate of the current flowing through the electric machine (2), a total harmonic distortion of the current flowing through the electric machine,
   an absolute amplitude of harmonic distortion of the electric current flowing through the electric machine.

2. Device for controlling an inverter according to Claim 1, **characterized in that** said chart is obtained beforehand.

3. Device for controlling an inverter according to Claim 1, **characterized in that** said chart is obtained during operation after the system has been started up.

4. Device for controlling an inverter according to Claim 1, 2 or 3, **characterized in that** the operating parameters of the electric machine are a rotational speed ($\omega$) of the electric machine (2) and an intensity (I) of the electric current.

5. Device for controlling an inverter according to any one of Claims 1 to 4, **characterized in that** the chart has been established through numerical analyses and/or simulations.

6. Device for controlling an inverter according to any one of Claims 1 to 5, **characterized in that** the permissible extreme frequency is a function of a plurality of said other parameters, each of which is predominant for a respective part of possible values of the operating parameters.

7. Device for controlling an inverter according to any one of Claims 1 to 6, **characterized in that** the permissible extreme frequency is a minimum frequency (fmin).

8. Device for controlling an inverter according to any one of Claims 1 to 7, **characterized in that** the system comprises a capacitor-type (8) input filter (4) between the power supply (3) and the inverter (1).

FIG. 1

- □ Pertes totales 15 kHz
- ◇ Pertes totales 12 kHz
- ○ Pertes totales 10 kHz
- △ Pertes totales 8 kHz
- × Pertes totales 5 kHz
- + Pertes conduction

FIG. 3

FIG. 2a

FIG. 2b

# FIG. 4

# FIG. 5

**EP 3 861 630 B1**

**RÉFÉRENCES CITÉES DANS LA DESCRIPTION**

**Documents brevets cités dans la description**

- US 8456115 B2
- US 9024557 B2
- EP 1850465 A2
- EP 2533417 A1
- EP 2161828 A1
- US 2017133961 A1
- EP 2237401 A1